Europäisches Patentamt

European Patent Office

Office européen des brevets

(11) Veröffentlichungsnummer: **0 482 465 A2**

## (12) EUROPÄISCHE PATENTANMELDUNG

(21) Anmeldenummer: **91117501.6**

(22) Anmeldetag: **14.10.91**

(51) Int. Cl.⁵: **G01N 31/16**

(30) Priorität: **25.10.90 DE 4033908**

(43) Veröffentlichungstag der Anmeldung:
**29.04.92 Patentblatt 92/18**

(84) Benannte Vertragsstaaten:
**BE CH DE FR GB IT LI NL**

(71) Anmelder: **MERCK PATENT GESELLSCHAFT MIT BESCHRÄNKTER HAFTUNG**
**Frankfurter Strasse 250**
**W-6100 Darmstadt(DE)**

(72) Erfinder: **Fischer, Wolfgang, Dr.**
**Kroehweg 27**
**W-6100 Darmstadt(DE)**
Erfinder: **Krenn, Karl-Dieter**
**Zieglerstrasse 41**
**W-6102 Pfungstadt(DE)**

(54) **Wasserstandard.**

㊼ Die Erfindung betrifft einen festen Wasserstandard und seine Verwendung bei Wasserbestimmungen nach Karl Fischer. Der Wasserstandard enthält Lactosemonohydrat.

EP 0 482 465 A2

Die Erfindung betrifft einen festen Wasserstandard und seine Verwendung bei Wasserbestimmungen nach Karl Fischer.

Aus dem Stand der Technik sind bereits flüssige und auch feste Wasserstandards bekannt. Der übliche flüssige Wasserstandard besteht aus wasserfreiem Methanol, dem eine genau definierte Wassermenge zugesetzt wurde. Aus EP 75 246 ist ein flüssiger Wasserstandard bekannt, der einen definierten Wassergehalt in einem Gemisch bestimmter wasserfreier Lösungsmittel enthält, z.B. 0,5 g Wasser in 70 g Xylol und 30 g i-Butanol.

Als fester Wasserstandard wird bisher Natriumtartratdihydrat verwendet. Diese Substanz hat jedoch den Nachteil, daß sie verhältnismäßig viel Wasser enthält (17,4 %) und deshalb für volumetrische Mikrotitrationen, insbesondere für coulometrische Wasserbestimmungen nach Karl Fischer nicht brauchbar ist. Die Einwaagen dieser Substanz müßten so klein sein, daß der Wägefehler die Genauigkeit der Analyse ungünstig beeinflußt.

Der Erfindung liegt die Aufgabe zugrunde, einen festen Wasserstandard zur Verfügung zu stellen, der bei Analysen eingesetzt werden kann, bei denen ein Standard mit sehr geringem Wassergehalt erforderlich ist.

Gegenstand der Erfindung ist ein Wasserstandard, der Lactosemonohydrat enthält. Ein weiterer Gegenstand der Erfindung ist die Verwendung von Lactosemonohydrat als Wasserstandard bei Wasserbestimmungen nach Karl Fischer.

Überraschenderweise hat sich gezeigt, daß Lactosemonohydrat vorzüglich als Wasserstandard geeignet ist, insbesondere für coulometrische Wasserbestimmungen nach Karl Fischer. Die Verbindung enthält weniger als ein Drittel der Wassermenge (5 %) im Vergleich zu Natriumtartratdihydrat. Vor allem aber ist die Verbindung stabil und sie ändert ihren Wassergehalt an der Luft praktisch nicht. Sie ist weder hygroskopisch, noch gibt sie unter normalen Bedingungen Wasser ab. Der feste Wasserstandard nach der Erfindung besteht vorzugsweise aus reinem Lactosemonohydrat.

Bei der Durchführung volumetrischer Mikrotitrationen oder coulometrischer Wasserbestimmungen nach Karl Fischer wird eine exakt eingewogene Menge des erfindungsgemäßen festen Wasserstandards zu dem bei der Analyse verwendeten Lösungsmittel hinzugegeben und darin aufgelöst.

**Patentansprüche**

1. Wasserstandard enthaltend Lactosemonohydrat.

2. Verwendung von Lactosemonohydrat als Wasserstandard bei Wasserbestimmungen nach Karl Fischer.